# EUROPEAN PATENT SPECIFICATION

(11) **EP 0 813 787 B1**
(45) Date of publication and mention of the grant of the patent: **21.11.2001**
(21) Application number: 96907476.4
(22) Date of filing: 08.03.1996
(51) Int. Cl.: H04M 19/02, H04M 19/04, H04M 1/57

(54) **A TELEPHONE SET HAVING CALLING PARTY DEPENDENT RINGING**
TELEFONGERÄT MIT ANRUFERABHÄNGIGEM RUFSIGNAL
COMBINE TELEPHONIQUE A SONNERIE VARIABLE EN FONCTION DE L'ORIGINE DE L'APPEL

(30) Priority: 08.03.1995 EP 95200569
(43) Date of publication of application: 29.12.1997
(73) Proprietor: TELEFONAKTIEBOLAGET L M ERICSSON (publ), 126 25 Stockholm (SE)
(72) Inventor: VAN DER SALM, Peter, NL-3572 ZR Utrecht (NL); TEN WOLDE, Jan, Hendrik, Louis, NL-7545 RP Enschede (NL)
(74) Representative: Fieret, Johannes, Ir.
(86) International application number: EP9601100
(87) International publication number: WO9627974

(56) References cited:
- EP-A- 0 416 803
- WO-A-91/07041
- WO-A-93/26132
- WO-A-94/06254
- DE-U- 9 420 829
- GB-A- 2 268 663
- US-A- 5 001 709
- US-A- 5 073 922
- PROCEEDINGS OF THE IEEE, vol. 80, no. 4, April 1992, pages 644-652, XP002005747 D. WILSON: "Signaling System No. 7, IS-41 and Cellular Telephony Networking - inspec 4202378"

## Description

### Field of the Invention

The present invention relates generally to telecommunications terminal devices comprising ringing means and, more particulary, to telephone sets comprising ringing devices capable of providing a variety of distinctive ringing or alerting sounds for information purposes.

### Background of the Invention

Conventional wired and wireless telephone sets include ring tone generator means of an electro-mechanical or electronic type. The ring tone generator means are either directly actuated by a separate ring signal provided by a public or private telephone network to which the telephone set is connected, or indirectly, via an actuation circuit in the telephone set itself, which circuit is triggered by call arriving data obtained from signalling information provided by the telephone network.

A plurality of such ring tone devices are already known. European Patent Application 0,203,394 discloses an electronic music/voice ringer circuit for use in telephone sets. The circuit can be connected directly to the telephone network line providing a series of intermittent ring pulses. The circuit converts these ring pulses into continuous music ringing signals or voice ringing signals. The piece of music or voice signals to be reproduced are pre-stored.

British Patent Application 2,220,822 discloses a telephone set providing the user of the set with the possibility of recording various sounds in a recording and reproducing unit, such that the telephone can have a distinctive ringing sound, e.g. among a number of adjacent telephones.

US Patent 4,866,766 discloses a telephone device having a customized ring capability. The telephone set comprises a user programmable ring tone generator. A ringing sound has to be stored in dedicated memory means by inputting from the dialling keypad of the telephone set coded ring parameters. On receipt of a ring signal from the telephone switching network, the ring parameters are activated from the memory means to produce an audible ring pattern and ring tone.

European Patent Application 0,604,081 discloses a ring tone device for creating a ringing sound in accordance with data, such as the subscriber number or any other identification number unique to the telephone set. The ring tone device comprises a user programmable ring tone parameter memory for storing a ring tone sequence defining a particular ringing sound.

These known ring tone devices are limited to the extent that they can only produce distinct ringing or alerting sounds to distinguish one's own telephone among a plurality of adjacent telephones. However, in some telecommunication systems a number of users share the same telephone device.

US Patent 5,073,922 and International Patent Application 9,107,041 disclose telecommunications arrangements comprising ring tone means for identifying a specific user to receive a call on a telephone terminal device which is shared by a number of users and/or to distinguish a particular terminal device among a plurality of terminal devices connected to the same subscriber line. Each user and/or terminal is assigned a specific ring tone signal stored in a memory of the terminal device. The calling party has to dial the telephone number of the telephone device as well as an additional number to identify that the call is for a particular person and/or terminal.

US Patent 5,001,709 discloses a ring tone arrangement for providing different ringing tones for a speech or verbal call and a data call in an ISDN system.

The use of these known "personalized" ringing tone arrangements is, however, limited to telecommunications systems having a signalling system capable of transferring the required additional identification data.

European Patent Application 0,416,803 provides a method and an apparatus to enable a user to determine whether he or she is the intended recipient of an incoming call and the type of call. To this end, the ring signal is divided into two segments. The first segment is used for personalized ring tones, i.e. identifying the called party, and the second segment is used for indicating the type of call, i.e. internal, external, priority call etc.

The feature of priority ringing includes the so-called calling party identification ringing. That is, for a limited number of calling party identification numbers, stored in a memory of the telephone apparatus, a unique ringing sound can be produced for calls arriving from such prioritized parties.

Canadian Patent Application 2,105,543 and Japanese Patent Application JP 60-128,294 disclose telephone terminal devices having ringing tone means for selectively alerting the user of a telephone device to incoming calls in accordance with a programmed allocation of caller identification numbers and/or categories of incoming calls (business, family, etc.). In a preferred embodiment, the typical telephone system calling number identification signal (A-number) is used for this purpose.

This feature provides the user of a telephone terminal information about the calling party, even before the call has been answered which is, for example, advantageous in case of meetings and the like. The user of the telephone set can simply discriminate an allowed phone call, for example originated by a party providing additional information to the user during the meeting or a special caller, such as a secretary, by the ringing sound produced and can respond to such call by going off hook. However, in case of other arriving telephone calls, which again can be determined from listening to the ringing sound, the user can respond to the call by clearing the ring signal and not going off hook, for example. In some types of modern telephone sets this requires just the pressing of a single key or button. The user can also, for example, respond by transferring the call to a predefined other user, such as a secretary, which again may just require the actuation of a single key.

The above prior art telecommunications devices are only capable of providing calling party dependent ringing upon receipt of call arrival data from the switching network which matches limited user identification data pre-stored in a memory or other registration means of the telecommunications device.

### Summary of the Invention

It would be an advantage to have a telecommunications terminal, such as a wired or wireless telephone set, capable of providing the user of such device a variety of distinctive ringing sounds not necessarily requiring special or dedicated memory means for pre-storing user identification data or requiring relevant programming by the user of the telephone set.

Accordingly, it is an object of the present invention to provide a telecommunications terminal device having ringing sound alerting capabilities providing the user of the device information relating to, for example, a calling party, special calls like emergency calls, voice message call, paging message call etc., not limited to the number of stored identification data in the terminal device or the network to which the terminal is connected.

It is also an object of the present invention to provide a telecommunications terminal device having easy to programm ringing sound capabilities, providing a wide variety of ringing or alerting sounds.

These and other objects, advantages and features of the present invention are provided by a telecommunications terminal device such as a telephone set, in particular a radio telephone set, having ring generator means for producing a ringing sound in accordance with signalling information received by the terminal device and relating to the identity of a calling party. The ring generator means are, following the invention, arranged for producing a ringing sound from the calling party identity data provided by the signalling information, such that for each such data a distinctive ringing sound can be produced.

Thus, in case of the arrival of a call, the present invention provides the user of the terminal device with a ring signal relating to the identity of the calling party, however without the need of retrieving ring signal data relating to the calling party's identity from dedicated memory means. Accordingly, the calling party dependent ringing of the terminal device according to the present invention is essentially not limited to the available memory space for storing ring signal parameters or the like.

This is an advantage for wireless or cordless terminal devices, such as telephone handsets, in which mounting space for electronic components and battery power are normally scarce.

With the present invention, after listening once or a few times to the ringing sound produced when a party is calling, the user of the terminal device can simply identify such calling party from the ringing sound produced. This information can be used to support the user's decision how to respond to the call. The device according to the invention is very easy to use, essentially requiring no memory updates or the like.

In a further embodiment of the invention, the data used for producing the ringing sound may be distinctive for a group of calling parties, e.g. users from different company sites.

Telecommunication networks, in particular private telephone networks, can provide a terminal device with different ring signals, in order to distinguish between the type of call, such as an emergency call, internal/external originated call, call back ringing etc. and/or the type of communication service, such as call forwarding, data call etc. In a yet further embodiment of the invention, the ring generator means are in addition responsive to generate a respective ringing sound from such data.

There are a plurality of manners in which the type of call or type of communication service can be made audible. The corresponding ringing sound can be produced directly after the ringing sound indicating the calling party identity, or as a (short) preamble to the calling party identity ringing, for example. A combination of sounds, such as a special modulation of the calling party ringing sound is also a possibility.

In its simplest embodiment, the ringing sound is directly produced from the respective received signalling information data. However, there is wide variety in how to produce a ringing tone. For example, such that each digit of a received calling party number (A-number) represents a tone of a particular height and duration. However, it is also possible to allocate different durations to the tones or to allocate silence to some of the digits. Even the strength of the tone can be different amongst received digits etc.

Those skilled in the art will appreciate that with such a wide variety of ringing tones it is possible to essentially provide to each terminal device a unique manner of how to produce the ringing sound. Thus making it possible to distinguish terminal devices by their own specific ringing.

However, users of a terminal device may require an option of having a personal or customized ringing sound, for example associated with a particular calling party or a group of calling parties. Accordingly, in a further embodiment of the invention the terminal device comprises processing means for processing data provided by the signalling information in accordance with a processing algorithm stored in the terminal device. The ring generator means are arranged for producing a ringing sound from these processed data.

Dependent on the user requirements and/or the signalling information available, for example, several processing algorithms may be automatically selected by the terminal device to provide a specific and informative ringing. The processing algorithms may be pre-stored as software data by the manufacturer of the terminal device, or may be programmable by the user, for example using keyboard means of the terminal device.

In order to save memory space and processing power, the processing of signalling information and/or the processing algorithms can be also installed hard wired, i.e. by suitable electronic circuitry. The selection of a particular processing algorithm can be provided by switching means or automatically by the telephone set itself when it is used for the first time, for example. Other additionally provided data may be used for generating a customized ringing sound too.

To date there are quite a number of public and private telephone networks which, for the time being, have no provision of signalling information containing calling party identity etc. Accordingly, in an embodiment of the invention, for producing a ringing sound in the absence of signalling information identifying either one or both the calling party identity and group identity, type of call and type of communication service, the ringing sound is produced using default data stored in the terminal device. These data may be common to each terminal device and each type of information, i.e. calling party identity, type of call, type of telephone service, or customized as described above.

Although the invention provides essential unlimited calling party dependent ringing, users may require for a limited number of calling parties recognizable or very special ringing sounds, for example sweet tunes for relatives and dissonant tunes for rivals or the like. Accordingly, in a yet further embodiment of the invention the telephone set comprises memory means responsive to processing means for retrieving data associated with data obtained from the signalling information. Such that a ringing sound is produced using these retrieved data, in particular data relating to the calling party and one or more groups of calling parties, stored in a first part of the memory means.

Accordingly, based on the signalling information, the memory means are first interrogated for personal or customized ringing sound data relevant to the type of signalling information obtained. If no such data is found, a ringing sound produced from the received data will be provided.

In order to limit the memory requirements and processing power for the interrogation of the memory means, there may be provided a combination of personal and general ringing sound data, the latter being obtained from the signalling information, either directly or through a (selected) processing algorithm, for example. With such an embodiment, the user of a terminal device and/or the operator of a telecommunications network are provided with a tremendous freedom of customized ringing.

To achieve an optimum freedom of ringing sound selection, in an embodiment of the invention the terminal device is provided with selection means for selecting a ringing sound produced of either one of the calling party and group identity data provided by the signalling information, a processing algorithm stored in the terminal device and data stored at the memory means. This selection may be made by default or in a predetermined or non-alterable manner by the manufacturer of the terminal device or the operator of a telecommunications network with which the terminal device is associated. In general, customized ringing may be implemented providing a similar device as the well known SIM-card.

The ring generator means of the telephone set according to the present invention may be either one of a group of synthesized voice, recorded voice, synthesized music, recorded music, single tone and multiple tone producing means.

Particularly in large networks, it may be difficult to distinguish between different music or audio ringing sounds uniquely identifying the calling party. In such case another embodiment of the invention is very advantageous, in which the ringing sound takes the form of or is replaced by a voice signal outputting the name of the calling party or the type of call, for example. The voice producing means may be arranged such to produce an audible alerting signal corresponding to the voice of the calling party. To this end, use can be made of speech coding and decoding means already present in modern digital telephone sets, such as operating in accordance with digital cordless and/or digital cellular mobile communication systems.

The invention further relates to a method of generating a ringing sound in a telecommunications device such as a telephone set, in particular a radio telephone set having ring generator means for producing a ringing sound in accordance with signalling information received by the terminal device and relating to the identity of a calling party. The method comprising the steps of ascertaining whether signalling information relevant to the identity of the calling party is present or absent, if present, obtaining data from said signalling information relevant to the identity of the calling party, transferring said data to said ring generator means for producing a ring signal from said data, which ring signal can be distinctive for each said data, and actuating said ring generator means using said ring signal in order to produce a ringing sound.

In further embodiments of the method according to the invention, data transferred to the ring generator means may relate to other received signalling information, may be preprocessed according to a processing algorithm, may be retrieved from a memory, or default data, either user programmable or pre-stored.

It has been found that the number of tones including semitones of a single music octave is equal to the number of keys of a conventional dialling telephone keypad, i.e. the ten numeric or digit keys (0-9) and the two keys "*" and "#", respectively. Accordingly, for producing a customized ringing sound, in particular a piece of music, in a further embodiment of the method according to the invention each key of the keypad represents a particular tone of a single octave. By additionally assigning to each key a duration and/or octave number of a particular tone, every piece of music can be stored into the memory means.

The above-mentioned and other features and advantageous of the invention are illustrated in the following description with reference to the enclosed drawings.

### Brief Description of the Drawings

Fig. 1 shows, in a schematic and illustrative manner, a digital data stream comprising data bursts of a digital radio telecommunication system.

Fig. 2 shows a simplified block diagram of a radio telephone set operating according to the present invention.

Fig. 3 shows a flow chart illustrating the ringing operation of the telephone set of Fig. 2.

Fig. 4 shows a block diagram of a further embodiment of the telephone set of Fig. 2.

Fig. 5 shows, in a schematic and illustrative manner, a conventional keypad for use in a telephone set.

### Detailed Description of the Embodiments

Without the intention of a limitation, the invention will now be explained by an embodiment of a telephone set for use with digital cordless communication systems designated CT2, CT2-CAI, CT3 and DECT (Digital Enhanced Cordless Telecommunications) and/or digital cellular communication systems designated IS-54B in North America and the pan-European GSM networks.

DECT is a mandatory standard for digital cordless radio telecommunication systems, i.e. for use in business environments such as offices and in residential areas, such as Radio in the Local Loop (RLL) and Cordless Terminal Mobility (CTM) applications. DECT uses a Multi-Carrier (MC)/Time Division Multiple Access (TDMA)/Time Division Duplex (TDD) format for radio communication between the remote units such as cordless telephone sets and base-stations connected to a public or private switching network. With DECT, ten radio carriers are available. Each carrier is divided in the time domain into twenty-four 'time-slots'. Two time-slots are used to create a duplex speech channel, effectively resulting in twelve available speech channels at any of the ten radio carriers. The twenty-four time slots are transmitted in so-called TDMA frames having a frame cycle time T_{F} of 10 ms.

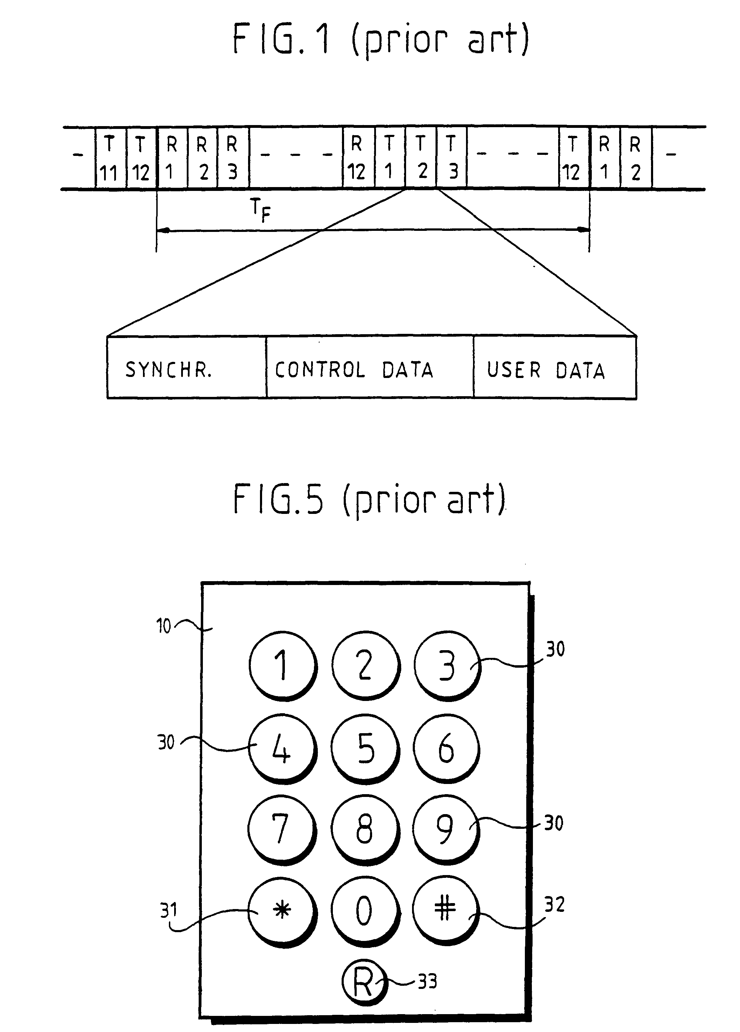

A typical frame structure for a digital TDMA/TDD communication system is shown in Fig. 1. During the first halve of the frame, i.e. the first twelve time-slots designated R1, R2, ... R12, data from the base station are received by the telephone set, whereas in the second halve of each frame, i.e. the second twelve time-slots designated T1, T2, ... T12, the telephone set transmits data to the base station. A radio connection between a base station and a telephone set is assigned a slot in the first halve of the frame and a slot bearing the same number in the second halve of the frame. Each time-slot typically contains synchronization data, control data and digitized speech or user data.

Signalling information, such as data referring to the calling party, the type of call, the type of service and ring signals may be included in both the control data and the speech or user data. Reference is made to International Patent Application WO 94/06254 by Ericsson Business Mobile Networks B.V.

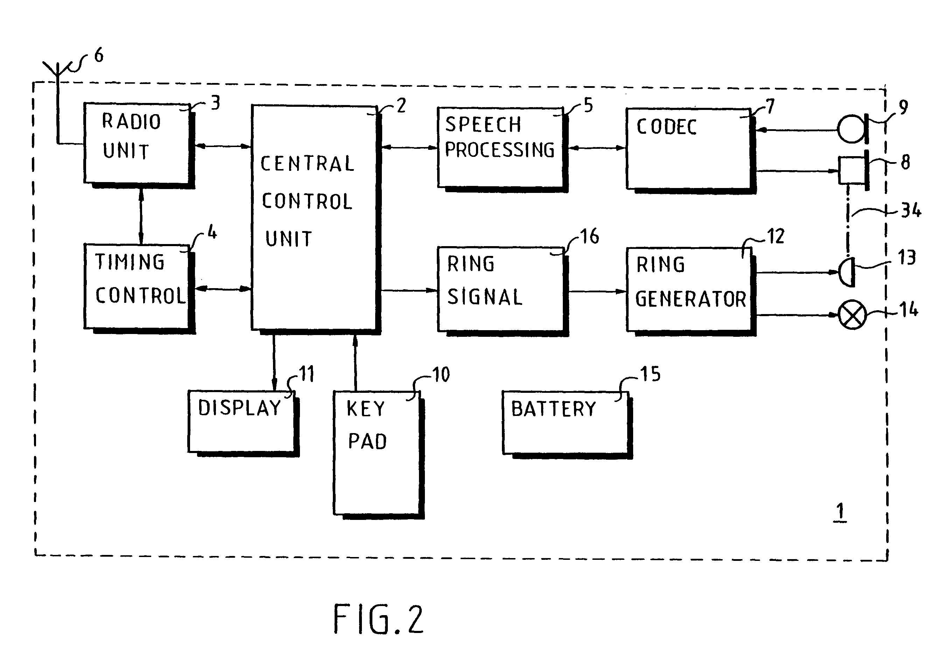

Fig. 2 shows a simplified block diagram of a radio telephone set 1, having four essential building blocks, i.e. a central control and application logic unit 2, a radio unit 3, a timing and synchronisation control unit 4 and a speech processing unit 5.

The radio unit 3 comprises an air interface in the form of an antenna 6 coupled to a transceiver unit comprising a transmitter/modulator and a receiver/demodulator. Transmission and reception timing is controlled by the timing control unit 4. In case of TDMA/TDD technology this timing control unit 4 controls, among others, frame and time slot synchronisation. Timing reference is either internally generated or derived from a synchronisation signal received over the antenna 6.

The central control unit 2, receives data from the radio unit 3. Signalling and synchronisation information are removed from the received data and received speech data is fed to the speech processing unit 5. The speech processing unit 5, among others, takes care of the deciphering of received data. A codec 7 decodes the received digitized speech data into analog form for making it audible to a user of the handset via a loudspeaker 8 connected to the codec 7.

Speech produced by the user is received by a microphone 9 and encoded into a suitable digital format by the codec 7. This encoded speech data is fed to the speech processing unit 5 which, among others, takes care of encryption of the speech data. The central control unit 2 adds suitable synchronisation and signalling information to the encrypted speech data. The radio unit 3 transmits this signalling and speech data via the antenna 6 for reception by a base station (not shown) of the communication system to which the telephone set 1 is connected.

In case of a multi-carrier multi-time-slot technology, such as DECT, the central control unit controls also the various combinations of carrier frequencies and time-slots.

Further, the telephone set 1 comprises a keypad 10 and a display 11, both connected to the central control unit 2, for control of the telephone by a user.

The central control unit 2 detects incoming calls and controls outgoing calls. The arrival of a call is detected from the suitable signalling information in the control and/or user data field of the arriving data frames. At the detection of the arrival of a call, ring generator means 12 are actuated from the central control unit 2 for producing a ringing or alerting sound by a buzzer 13 and, optionally, a visual alerting signal emitted by a lamp or Light Emitting Diode (LED) 14. For the overall powering of the telephone set 1, a battery unit 15 is included.

According to the present invention, the central control logic unit 2 is arranged for processing the received signalling information, such to form a ring signal for actuating the ring generator means 12 to produce a ringing sound dependent on the identity of the calling party. This arrangement is schematically indicated with reference numeral 16. Note that this arrangement 16 may be integral to the central control unit 2 and/or the ring generator means 12 and may be provided with means for storing default data for producing a ring signal in the case of absence of relevant signalling information.

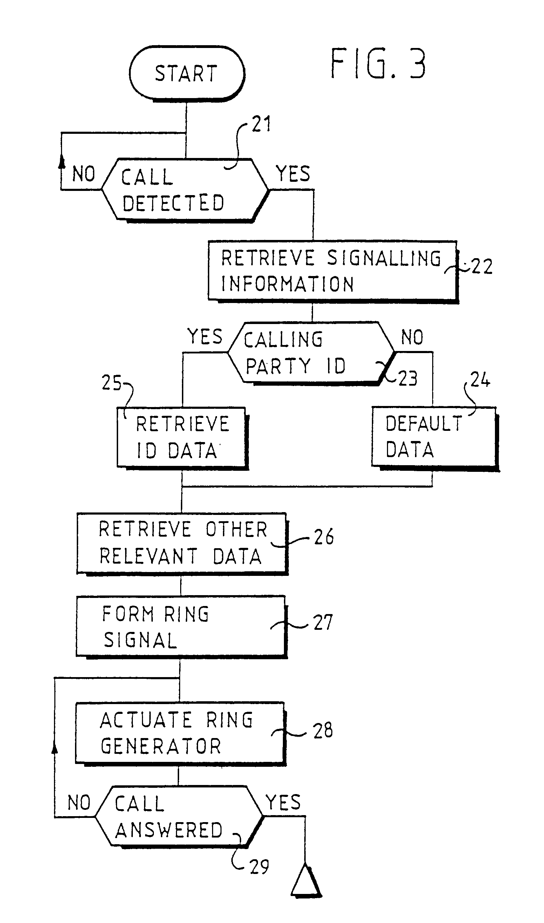

Fig. 3 shows a flow chart diagram illustrating a direct ringing embodiment of the present invention. It is assumed that the telephone set is in operation, i.e. switched to its idle state, such that start up and initialisation routines have been executed. In this flow chart diagram it is assumed that the flow direction is from the top of the chart to the bottom thereof. Any flow other than the assumed direction is indicated with an upwardly directed arrow.

The flow chart starts at block 21 "CALL DETECTED", where the central control unit 2 is waiting for an incoming call, i.e. block 21 decision "NO". When a call arrives, i.e. block 21 "YES", signalling information relevant to the present invention is retrieved at block 22 "RETRIEVE SIGNALLING INFORMATION". Relevant signalling information includes data as to the identity of the calling party and, optionally, data indicating the type of call e.g. external/internal/call back, data indicating the type of telephone service and any other data which could be relevant for a user to be informed of in supporting his decision how the call should be answered (picking up the phone, transfer of the call etc.).

At block 23 the signalling information is processed as to the identity of the calling party, "CALLING PARTY ID". If no identity data is available, block 23 "NO", default identity data can be retrieved at block 24 "DEFAULT DATA". If identity data is available, the decision in block 23 will be "YES". Other relevant signalling information such as data to the type of call, i.e. external, internal, call back etc. as described above, can be fetched at block 26 "RETRIEVE OTHER RELEVANT DATA". From this data, a ring signal is formed at block 27 "FORM RING SIGNAL" and the ring generator means are actuated in accordance with this ring signal, block 28 "ACTUATE RING GENERATOR".

As long as the call is not answered ringing will continue, block 29 "CALL ANSWERED", decision "NO". In the present flow chart, it is assumed that a call can be answered by either responding to it or by a time out of the switching network to which the telephone set is operatively connected, block 29 "YES". In such case ringing has to stop.

As already elucidated in the preamble of this description, the ring signal can be formed either directly from the received signalling data or by using a processing algorithm. Such a processing algorithm may be retrieved and executed in block 25 "RETRIEVE ID DATA" and/or at block 27 "FORM RING SIGNAL". In the implementation of the invention having additional memory means storing data for producing a special ringing sound relative to the identity of a calling party, such data is also retrieved at block 25 "RETRIEVE ID DATA".

The ring signal can be formed at a plurality of different manners. In each case it is recommended to have an intermittent ringing sound as with conventional ringing. The ringing sound produced may be any audible signal, such as but not limited to music or voice. The different signalling data may be combined to form a ring signal, e.g. modulation of the calling party identity sound with a group identity representation, the addition of a preamble to the party identity sound by an internal or external call representation sound etc. Suitable ring generator means are known from the above prior art.

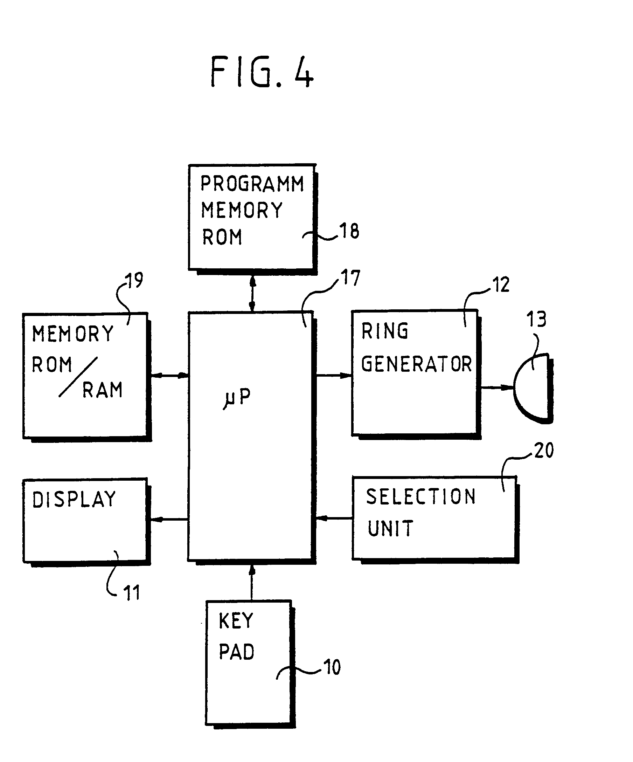

Fig. 4 shows a block diagram of a further embodiment of the telephone set of Fig. 2. There is shown a microprocessor 17 included with or operatively connected to the central control unit 2 of Fig. 2. The programm for the operation of the microprocessor is included in a programm memory 18, which is of the Read Only Memory (ROM) type. Further, memory means 19 are provided, connected to the microprocessor 17, which memory means may comprise non-volatile ROM and volatile Random Access Memory (RAM). The ring generator means 12 are directly controlled by the microprocessor 17. Data can be stored in the memory means 19 by the user of the telephone set using the keypad 10.

The memory means 19 may contain data relating to a number of processing algorithms, for example dependent on the type of signalling information which has to be made audibly distinguishable. These processing algorithms are fetched by the microprocessor 17 and together with the received signalling information processed into a ring signal for actuating the ring generator means 12.

In addition to the use of the signalling data obtained for producing a relevant ring signal, corresponding data stored in the memory means 19 relating to the identity of a calling party, e.g. a party associated with the telephone system to which the telephone set is connected, may be retrieved and processed by the microprocessor 17 to form a dedicated ring signal. In the case of absence of matching calling party information, the relevant signalling data will processed using any of the relevant processing algorithm, or directly.

The memory means 19 provide the opportunity of customized or personal ringing, that is the storage of dedicated ringing sounds and/or processing algorithms to be selected by the user of the telephone set or a system operator, for example. With a selection unit 20, connected to the microprocessor 17, the user of the telephone may select either one of the ringing options described, i.e. forming the ring signal direct from the signalling data, using a particular processing algorithm for example; forming the ring signal from corresponding data stored in the memory means; or default ringing such as a common customized ringing sound for each calling party, for example. The selection unit 20 may take several embodiments, including hard wired processing and selection by suitable switch means.

In the preferred embodiment of the invention, the ring generator means comprise timer means controlled by the microprocessor 17. These timer means are arranged for producing synthesized music. In the embodiment of the invention having additional memory means comprising dedicated ringing sounds for a particular number of calling parties, programming of these sounds is very easy by using the twelve keys of a conventional telephone dialling keypad 10, as shown in Fig. 5. Each of the twelve keys (30, 31, 32) represents a different tone of a single music octave, i.e. including semitones (sharps and flats). The duration of the tone to be produced is also assigned to one of the keys.

An example, the first pressing of a numeric key 30 (0-9) is interpreted by the microprocessor 17 as a duration, i.e 0=1/16 count, 1=1/8 counts, 2=1/4 counts etc.; one count = 640 msec = 95 beats/min. The second pressing of key (30, 31, 32) represents one of the 12 tones: 1=a, 2=a# (a sharp), 3=b etc. Any other available key on the keypad, such as the well known "R"-key 33 to put a call on hold, may be used to indicate a rest, i.e. silence. Thus, a combination of two key pressings represents a particular tone or a rest of a particular duration. A plurality of tones can be programmed to form a melody which is repeatedly played until the call is answered or cancelled. The string of programmed parameters, such as "2e1-2e1-2e1-4c7-", for example, in which "-" denotes a rest, may be displayed on the display 11 of the telephone set.

Optionally, to each key 30 there may be also assigned an octave number, which can be entered as a third key pressing, for example. With this, almost every piece of music can be composed.

This very same assignment of the keyboard numeric keys, however in general with the exception of the tones relating to the "*"- and "#"-keys (31, 32), may also be used for producing a ringing sound from the received signalling information data. That is, for each pair of subsequently received digits of a calling party's number, the first digit determines the duration of the tone and the second digit specifies the tone itself etc. However, any other assignment of tone heights, duration and even strength may be provided, such as will be appreciated by a skilled person.

In particular in the case of user programmable processing algorithms for processing the received signalling information, for one or a number of digits of received signalling data the so-called "wild card" programming can be provided. That is, independent of the value and/or the position of one or multiple digits of the received data, a particular tone or sound will be generated. This tone or sound can be made, of course, user programmable.

Instead of music, the ring generator means 12 may include speech synthesizer means, arranged to provide in a spoken manner the name of the calling party or the type of call. By selecting relevant speech parameters of a calling party, using the codec 7 and speech processing unit 5, for example, a speech or voice ring signal can be produced resembling the voice of the calling party. The buzzer 13 and loudspeaker 8 and, if applicable, their driving circuits, may be combined as an integral unit, such as indicated by a dot/dashed line 34 in Fig. 2.

Besides synthesizing of the ring signal, the ring generator means may also comprise (digital) recording means, for recording a piece of music or speech via the microphone 9 of the telephone set, such to produce a preferred ringing sound.

It will be understood that the present invention is not limited to the examples provided and its use in a radio telephone set, neither a digital radio set. The ringing tone device as disclosed may be used in any conventional wired digital and analogues telephone set, such as described in the above prior art.

## Claims

1. A telecommunications terminal device such as a telephone set, in particular a radio telephone set (1), having ring generator means (12, 16) for producing a ringing sound in accordance with signalling information received by said terminal device and relating to the identity of a calling party, **characterized in that** said ring generator means (12, 16) are arranged for producing a ringing sound from calling party identity data provided by said signalling information such that for each said data a distinctive ringing sound can be produced.

2. A terminal device according to Claim 1, wherein said ring generator means (12, 16) are responsive to said data provided by said signalling information and relating to the identity of a group of calling parties.

3. A terminal device according to Claim 1 or 2, wherein said ring generator means (12, 16) are arranged for producing a ringing sound from data provided by signalling information received by said terminal device and relating to either one or both of the type of call and communication service.

4. A terminal device according to any of the previous claims, comprising processing means (17) for processing said data provided by said signalling information in accordance with at least one processing algorithm stored in said terminal device, and wherein said ring generator means (12, 16) are arranged for producing a ringing sound from said processed data.

5. A terminal device according to Claim 4, wherein the or each processing algorithm is unique to said terminal device.

6. A terminal device according to Claim 4 or 5, further comprising means (19) for storing at least one processing algorithm in said terminal device by a user thereof, such to provide a customized ringing sound.

7. A terminal device according to any of the previous claims, comprising means (19)for storing default data, and means (17) for detecting the absence of relevant signalling information data, such to produce said ringing sound from said default data in the absence of said signalling information.

8. A terminal device according to Claim 7, further comprising means (10, 19) for storing said default data in said terminal device by a user thereof.

9. A terminal device according to any of the previous claims, comprising processing means (17) responsive to said signalling information, memory means (19) responsive to said processing means (17) for retrieving data of said memory means (19) associated with said data obtained from said signalling information, and wherein said ringing sound is produced from said retrieved data.

10. A terminal device according to Claim 9, wherein a first part of said memory means (19) is arranged for storing data relevant to the identity of users of a telecommunications system with which said terminal device is associated, and wherein data stored at said first part of said memory means (19) are used for producing a ringing sound identifying either one of said calling party identity and group identity.

11. A terminal device according to Claim 10, wherein the or each processing algorithm and default data are stored at a second part of said memory means (19).

12. A terminal device according to any of the claims 4-11, further comprising selection means (20), for the selection of said ringing sound produced from either one of said calling party and group identity data provided by said signalling information, a processing algorithm stored in said terminal device, said data stored at said first part of said memory means (19) and said data stored at said second part of said memory means (19).

13. A terminal device according to any of the previous claims, wherein said ring generator means (12, 16) is one of a group of synthesized voice, recorded voice, synthesized music, recorded music, single tone and multiple tone producing means.

14. A terminal device according to any of the previous claims, having a ring tone device comprising ring tone generator means (12, 16) arranged for producing synthesized music, and timer means arranged for control by processing means (17) from a key pad (10) having at least twelve keys (30, 31, 32), such as a conventional telephone dialling key pad, wherein a combination of two key pressings represents a particular one of twelve tones of a single music octave including semitones and a particular duration during which such tone is made audible by the ring tone generator means (12, 16).

15. A method of generating a ringing sound in a telecommunications device such as a telephone set, in particular a radio telephone set (1), having ring generator means (12, 16) for producing a ringing sound in accordance with signalling information received by said terminal device and relating to the identity of a calling party,
**characterized by** the steps of:
- ascertaining (22, 23) whether signalling information relevant to the identity of the calling party is present or absent,
- if present, obtaining data from said signalling information relevant to the identity of the calling party (25),
- transferring said data to said ring generator means (12) for producing (27) a ring signal from said data, which ring signal can be distinctive for each said data, and
- actuating (28) said ring generator means (16) using said ring signal in order to produce a ringing sound.

16. A method according to Claim 5, wherein said data for transferring to said ring generator means (12) is additionally obtained (26) from signalling information received by said terminal device and relating to either one of the identity of a group of calling parties, the type of call and the type of communication service.

17. A method according to Claim 16, wherein said ring signal is produced in accordance with at least one processing algorithm stored in said terminal device.

18. A method according to any of the claims 15, 16 or 17, wherein following the absence of either one or all relevant signalling information data, said ring signal is produced from default data (24) stored in said terminal.

19. A method according to any of the claims 15-18, wherein said terminal device further comprises processing means (17) responsive to said signalling information and memory means (19) responsive to said processing means (17), further comprising the steps of:
- retrieving data of said memory means (19) associated with said data obtained from said signalling information, and
- producing said ringing sound from said retrieved data.

20. A method according to Claim 17, 18, or 19, wherein the or each processing algorithm, default data and memory data are user programmable, such to produce a customized ringing sound.

21. A method according to Claim 20, wherein said terminal device further comprises telephone keypad means (10) having at least twelve keys (30, 31) for inputting data into said terminal device associated with said keys (30, 31), and wherein said ring signal is produced from data stored via said keypad means (10).

22. A method according to Claim 21, wherein each said key (30, 31) represents a particular tone including semitones of a single music octave.

23. A method according to Claim 19, wherein said ring signal is replaced by a voice signal produced from data stored in said memory means (19), such to produce an audible alerting signal providing in a spoken manner either one of a calling party's name, type of call and type of communication service.

24. A method according to Claim 23, wherein said terminal device further comprises speech codec means (7), and wherein data provided by said speech codec means (7) are used for storing voice data in said memory means (19), such to provide an audible alerting signal corresponding to a calling party's voice.

## Patentansprüche

1. Telekommunikationsendgerät-Vorrichtung wie etwa ein Telefongerät, insbesondere ein Funktelefongerät (1), mit Rufsignalgeneratormitteln (12, 16) zum Erzeugen eines Rufsignaltons entsprechend
Signalisierungsinformation, die von der Endgerätvorrichtung empfangen wird und sich auf die Identität eines rufenden Teilnehmers bezieht,
**dadurch gekennzeichnet, dass**
die Rufsignalgeneratormittel (12, 16) dafür ausgelegt sind, einen Rufsignalton aus Identitätsdaten des rufenden Teilnehmers zu erzeugen, die von der Signalisierungsinformation bereitgestellt werden, derart dass für jedes der Daten ein unterscheidender Rufsignalton erzeugt werden kann.

2. Endgerätvorrichtung nach Anspruch 1, wobei die Rufsignalgeneratormittel (12, 16) auf die Daten ansprechen, die durch die Signalisierungsinformation bereitgestellt werden und die sich auf die Identität einer Gruppe von rufenden Teilnehmern beziehen.

3. Endgerätvorrichtung nach Anspruch 1 oder 2, wobei die Rufsignalgeneratormittel (12, 16) ausgelegt sind zum Erzeugen eines Rufsignaltons aus Daten, die durch Signalisierungsinformation bereitgestellt werden, die von der Endgerätvorrichtung empfangen wird und die sich auf einen Anruftyp und/oder einen Anruf und Kommunikationsdiensttyp bezieht.

4. Endgerätvorrichtung nach einem der vorangegangenen Ansprüche mit Verarbeitungsmitteln (17) zum Verarbeiten der Daten, die durch die Signalisierungsinformation bereitgestellt werden, in Übereinstimmung mit zumindest einem Verarbeitungsalgorithmus, der in der Endgerätvorrichtung gespeichert ist und wobei die Rufsignalgeneratormittel (12, 16) ausgelegt sind, zum Erzeugen eines Rufsignaltons aus den verarbeiteten Daten.

5. Endgerätvorrichtung nach Anspruch 4, wobei der oder jeder Algorithmus für die Endgerätvorrichtung einzigartig ist.

6. Endgerätvorrichtung nach Anspruch 4 oder 5, ferner mit Mitteln (19) zum Speichern von zumindest einem Verarbeitungsalgorithmus in der Endgerätvorrichtung durch ihren Benutzer, um derart einen massgefertigten Rufsignalton bereitzustellen.

7. Endgerätvorrichtung nach einem der vorangegangenen Ansprüche, mit Mitteln (19) zum Speichern von Vorgabedaten und Mitteln (17) zum Detektieren des Fehlens von relevanten Signalisierungsinformationsdaten, um derart den Rufsignalton aus den Vorgabedaten beim Fehlen der Signalisierungsinformation bereitzustellen.

8. Endgerätvorrichtung nach Anspruch 7, ferner mit Mitteln (10, 19) zum Speichern der Vorgabedaten in der Endgerätvorrichtung durch einen ihrer Benutzer.

9. Endgerätvorrichtung nach einem der vorangegangenen Ansprüche mit Verarbeitungsmitteln (17), die auf die Signalisierungsinformation ansprechen, Speichermitteln (19), die auf die Verarbeitungsmittel (17) ansprechen zum Abfragen von Daten aus den Speichermitteln (19), die mit Daten verbunden sind, die von der Signalisierungsinformation erhalten werden und wobei der Rufsignalton aus den abgefragten Daten erzeugt wird.

10. Endgerätvorrichtung nach Anspruch 9, wobei ein erster Teil der Speichermittel (19) ausgelegt ist zum Speichern von Daten, relevant für die Identität von Benutzern eines Telekommunikationssystems, mit dem die Endgerätvorrichtung verbunden ist, und wobei Daten, die in dem ersten Teil der Speichermittel (19) gespeichert sind, verwendet werden zum Erzeugen eines Rufsignaltons, der entweder die Identität des rufenden Teilnehmers oder die Gruppenidentität identifiziert.

11. Endgerätvorrichtung nach Anspruch 10, wobei der oder jeder Verarbeitungsalgorithmus und Vorgabedaten in einem zweiten Teil der Speichermittel (19) gespeichert sind.

12. Endgerätvorrichtung nach einem der Ansprüche 4 bis 11, ferner mit Auswahlmitteln (20) für die Auswahl des Rufsignaltons, der aus den Identitätsdaten des rufenden Teilnehmers oder den Gruppenidentitätsdaten, die von der Signalisierungsinformation bereitgestellt werden, einem Verarbeitungsalgorithmus, gespeichert in der Endgerätvorrichtung, den Daten, gespeichert in dem ersten Teil der Speichermittel (19), und den Daten, gespeichert in dem zweiten Teil der Speichermittel (19), erzeugt wird.

13. Endgerätvorrichtung nach einem der vorangegangenen Ansprüche, wobei das Rufsignalgeneratormittel (12, 16) eines aus einer Gruppe bestehend aus Synthetische-Stimme-, Aufgezeichnete Stimme-, Synthetische-Musik-, Aufgezeichnete-Musik-, Einzelton- und Mehrton-Erzeugungsmittel ist.

14. Endgerätvorrichtung nach einem der vorangegangenen Ansprüche mit einer Rufsignaltoneinrichtung mit Rufsignaltonerzeugungsmitteln (12, 16), die ausgelegt sind zum Erzeugen von synthetischer Musik, und Zeitgebermitteln, die ausgelegt sind zum Steuern durch Verarbeitungsmittel (17) von einem Tastenfeld (10) mit zumindest zwölf Tasten (30, 31, 32), wie etwa einem herkömmlichen Telefonwähltastenfeld, wobei eine Kombination von zwei Tastendrücken einen besonderen Ton von zwölf Tönen einer einzelnen Musikoktave einschließlich Halbtönen und eine bestimmte Dauer repräsentiert, während welcher dieser Ton von den Rufsignaltongeneratormitteln (12, 16) hörbar gemacht werden.

15. Verfahren zum Erzeugen eines Rufsignaltons in einem Funktelefongerät (1) mit Rufsignalgeneratormitteln (12, 16) zum Erzeugen eines Rufsignaltons in Entsprechung zu Signalisierungsinformation, empfangen von der Endgerätvorrichtung und bezogen auf die Identität eines rufenden Teilnehmers,
**gekennzeichnet durch**
die Schritte:
- Feststellen (22, 23) ob Signalisierungsinformation relevant für die Identität des rufenden Teilnehmers vorhanden ist oder fehlt,
- falls vorhanden, Ermitteln von Daten aus der Signalisierungsinformation, relevant für die Identität des rufenden Teilnehmers (25),
- Übertragen der Daten an die Rufsignalgeneratormittel (12) zum Erzeugen (27) eines Rufsignalstons aus diesen Daten, wobei der Rufsignalton unterscheidbar für jede dieser Daten sein kann; und
- Betätigen (28) der Rufsignalgeneratormittel (16) unter Verwendung des Rufsignals, um einen Rufsignalton zu erzeugen.

16. Verfahren nach Anspruch 15, wobei die Daten zum Übertragen an die Rufsignalgeneratormittel (12) zusätzlich erhalten werden (25) aus Signalisierungsinformation, die von der Endgerätevorrichtung empfangen wird und die sich entweder auf die Identität einer Gruppe rufender Teilnehmer, den Anruftyp oder den Typ des Kommunikationsdienstes bezieht.

17. Verfahren nach Anspruch 16, wobei das Ruftonsignal erzeugt wird in Übereinstimmung mit zumindest einem Verarbeitungsalgorithmus, der in der Endgerätvorrichtung gespeichert ist.

18. Verfahren nach einem der Ansprüche 15, 16 oder 17, wobei in Folge des Fehlens von einem oder allen relevanten Signalisierungsinformationsdaten, das Rufsignal erzeugt wird aus Vorgabedaten (24), die in dem Endgerät gespeichert sind.

19. Verfahren nach einem der Ansprüche 15 bis 18, wobei die Endgerätvorrichtung ferner umfasst Verarbeitungsmittel (17), die auf die Signalisierungsinformation ansprechen und Speichermittel (19), die auf die Verarbeitungsmittel (17) ansprechen, mit ferner den Schritten:
- Abfragen von Daten der Speichermittel (19), die zu den Daten zugeordnet sind, die aus der Signalisierungsinformation erhalten werden, und
- Erzeugen des Rufsignaltons aus den abgefragten Daten.

20. Verfahren nach Ansprüch 17, 18 oder 19, wobei der oder die Verarbeitungsalgorithmen, Vorgabedaten und Speicherdaten benutzerprogrammierbar sind, um derart einen benutzerspezifischen Rufsignalton zu erzeugen.

21. Verfahren nach Anspruch 20, wobei die Endgerätvorrichtung ferner Telefontastenfeldmittel (10) umfasst mit zumindest zwölf Tasten (30, 31) zum Eingeben von Daten in die Endgerätvorrichtung, die den Tasten (30, 31) zugeordnet sind, und wobei der Rufton erzeugt wird aus den Daten, die mittels der Tastenfeldmittel (10) gespeichert sind.

22. Verfahren nach Anspruch 21, wobei jede der Tasten (30, 31) einen bestimmten Ton einschließlich Halbtönen einer einzelnen Musikoktave repräsentiert.

23. Verfahren nach Anspruch 19, wobei der Rufton ersetzt wird durch ein Sprachsignal, das aus Daten erzeugt wird, die in den Speichermitteln (19) gespeichert sind, um derart ein hörbares Alarmierungssignal zu erzeugen, das in einer gesprochenen Weise entweder den Namen eines rufenden Teilnehmers, den Anruftyp oder den Kommunikationsdiensttyp zur Verfügung stellt.

24. Verfahren nach Anspruch 23, wobei die Endgerätevorrichtung ferner umfasst Sprach-Codec-Mittel (7) und wobei Daten, die von den Sprach-Codec-Mitteln bereitgestellt werden, verwendet werden zum Speichern von Sprachdaten in den Speichermitteln (19), um derart ein hörbares Alarmierungssignal bereitzustellen, das zu der Stimme eines rufenden Teilnehmers korrespondiert.

## Revendications

1. Dispositif terminal de télécommunication tel qu'un poste téléphonique, en particulier un poste téléphonique portable (1), ayant des moyens générateurs de sonnerie (12, 16) pour produire un son de sonnerie conformément à une information de signalisation reçue par ce dispositif terminal, et concernant l'identité d'un demandeur, **caractérisé en ce que** les moyens générateurs de sonnerie (12, 16) sont constitués pour produire un son de sonnerie à partir de données d'identité de demandeur fournies par l'information de signalisation, de façon qu'un son de sonnerie distinctif puisse être produit pour chacune de ces données.

2. Dispositif terminal selon la revendication 1, dans lequel les moyens générateurs de sonnerie (12, 16) réagissent aux données fournies par l'information de signalisation et concernant l'identité d'un groupe de demandeurs.

3. Dispositif terminal selon la revendication 1 ou 2, dans lequel les moyens générateurs de sonnerie (12, 16) sont constitués pour produire un son de sonnerie à partir de données fournies par l'information de signalisation reçue par le dispositif terminal et concernant soit le type d'appel, soit le service de communication, soit les deux.

4. Dispositif terminal selon l'une quelconque des revendications précédentes, comprenant des moyens de traitement (17) pour traiter les données fournies par l'information de signalisation conformément à au moins un algorithme de traitement stocké dans le dispositif terminal, et dans lequel les moyens générateurs de sonnerie (12, 16) sont constitués pour produire un son de sonnerie à partir de ces données traitées.

5. Dispositif terminal selon la revendication 4, dans lequel l'algorithme ou chaque algorithme de traitement est propre au dispositif terminal.

6. Dispositif terminal selon la revendication 4 ou 5, comprenant en outre des moyens (19) pour permettre à un utilisateur du dispositif terminal de stocker dans celui-ci au moins un algorithme de traitement, de façon à fournir un son de sonnerie personnalisé.

7. Dispositif terminal selon l'une quelconque des revendications précédentes, comprenant des moyens (19) pour stocker des données prises par défaut, et des moyens (17) pour détecter l'absence de données d'information de signalisation pertinentes, de façon à produire le son de sonnerie à partir des données prises par défaut en l'absence de l'information de signalisation.

8. Dispositif terminal selon la revendication 7, comprenant en outre des moyens (10, 19) pour permettre à un utilisateur du dispositif terminal de stocker dans celui-ci les données prises par défaut.

9. Dispositif terminal selon l'une quelconque des revendications précédentes, comprenant des moyens de traitement (17) réagissant à l'information de signalisation, et des moyens de mémoire (19) réagissant aux moyens de traitement (17) en extrayant des données des moyens de mémoire (19) associées aux données obtenues à partir de l'information de signalisation, et dans lequel le son de sonnerie est produit à partir des données extraites.

10. Dispositif terminal selon la revendication 9, dans lequel une première partie des moyens de mémoire (19) est destinée à stocker des données concernant l'identité d'utilisateurs d'un système de télécommunication auquel le dispositif terminal est associé, et dans lequel des données stockées dans la première partie des moyens de mémoire (19) sont utilisées pour produire un son de sonnerie identifiant soit une identité de demandeur, soit une identité de groupe.

11. Dispositif terminal selon la revendication 10, dans lequel l'algorithme ou chaque algorithme de traitement et les données prises par défaut sont stockés dans une seconde partie des moyens de mémoire (19).

12. Dispositif terminal selon l'une quelconque des revendications 4-11, comprenant en outre des moyens de sélection (20), pour la sélection du son de sonnerie qui est produit à partir des données d'identité de demandeur ou des données d'identité de groupe fournies par l'information de signalisation, d'un algorithme de traitement stocké dans le dispositif terminal, des données stockées dans la première partie des moyens de mémoire (19) et des données stockées dans la seconde partie des moyens de mémoire (19).

13. Dispositif terminal selon l'une quelconque des revendications précédentes, dans lequel les moyens générateurs de sonnerie (12, 16) sont l'un d'un groupe de moyens de génération de voix synthétisée, de voix enregistrée, de musique synthétisée, de musique enregistrée, de tonalité unique et de tonalités multiples.

14. Dispositif terminal selon l'une quelconque des revendications précédentes, ayant un dispositif de création de notes de sonnerie comprenant des moyens générateurs de notes de sonnerie (12, 16) constitués pour produire de la musique synthétisée, et des moyens de mesure de temps constitués pour être commandés par des moyens de traitement (17) à partir d'un clavier (10) ayant au moins douze touches (30, 31, 32), tel qu'un clavier de numérotation téléphonique classique, dans lequel une combinaison de deux appuis sur des touches représente l'une particulière de douze notes d'une seule octave de musique incluant des demi-tons, et une durée particulière pendant laquelle les moyens générateurs de notes de sonnerie (12, 16) font entendre une telle note.

15. Procédé de génération d'un son de sonnerie dans un dispositif de télécommunication tel qu'un poste téléphonique, en particulier un téléphone portable (1), ayant des moyens générateurs de sonnerie (12, 16) pour produire un son de sonnerie conformément à une information de signalisation reçue par le dispositif terminal et concernant l'identité d'un demandeur,
**caractérisé par** les étapes suivantes :
- on détermine (22, 23) si une information de signalisation concernant l'identité du demandeur est présente ou absente,
- si elle est présente, on obtient à partir de cette information de signalisation des données concernant l'identité du demandeur (25),
- on transfère ces données vers les moyens générateurs de sonnerie (12) pour produire (27) un signal de sonnerie à partir de ces données, ce signal de sonnerie pouvant être distinctif pour chacune des données, et
- on actionne (28) les moyens générateurs de sonnerie (16) en utilisant le signal de sonnerie afin de produire un son de sonnerie.

16. Procédé selon la revendication 15, dans lequel les données à transférer vers les moyens générateurs de sonnerie (12) sont en outre obtenues (26) à partir d'une information de signalisation reçue par le dispositif terminal et concernant soit l'identité d'un groupe de demandeurs, soit le type d'appel, soit le type de service de communication.

17. Procédé selon la revendication 16, dans lequel le signal de sonnerie est produit conformément à au moins un algorithme de traitement stocké dans le dispositif terminal.

18. Procédé selon l'une quelconque des revendications 15, 16 ou 17, dans lequel à la suite de l'absence de l'une quelconque des données d'information de signalisation pertinentes, ou de toutes, le signal de sonnerie est produit à partir de données prises par défaut (24) stockées dans le terminal.

19. Procédé selon l'une quelconque des revendications 15-18, dans lequel le dispositif terminal comprend en outre des moyens de traitement (17) réagissant à l'information de signalisation, et des moyens de mémoire (19) réagissant aux moyens de traitement (17), comprenant en outre les étapes suivantes :
- on extrait des moyens de mémoire (19) des données associées aux données obtenues à partir de l'information de signalisation, et
- on produit le son de sonnerie à partir de ces données extraites.

20. Procédé selon les revendications 17, 18 ou 19, dans lequel l'algorithme de traitement, ou chaque algorithme de traitement, les données prises par défaut et les données de mémoire sont programmables par l'utilisateur, de façon à produire un son de sonnerie personnalisé.

21. Procédé selon la revendication 20, dans lequel le dispositif terminal comprend en outre un clavier téléphonique (10) ayant au moins douze touches (30, 31) pour introduire dans le dispositif terminal des données associées à ces touches (30, 31), et dans lequel le signal de sonnerie est produit à partir de données stockées par l'intermédiaire du clavier (10).

22. Procédé selon la revendication 21, dans lequel chaque touche (30, 31) représente une note particulière, incluant des demi-tons, d'une seule octave de musique.

23. Procédé selon la revendication 19, dans lequel le signal de sonnerie est remplacé par un signal vocal produit par des données stockées dans les moyens de mémoire (19), de façon à produire un signal d'alerte audible indiquant, d'une manière parlée, l'une ou l'autre des informations suivantes : un nom de demandeur, un type d'appel et un type de service de communication.

24. Procédé selon la revendication 23, dans lequel le dispositif terminal comprend en outre des moyens codeurs-décodeurs de parole (7), et dans lequel des données fournies par les moyens codeurs-décodeurs de parole (7) sont utilisées pour stocker des données vocales dans les moyens de mémoire (19), de façon à fournir un signal d'alerte audible correspondant à une voix du demandeur.
